# EUROPEAN PATENT APPLICATION

(11) **EP 4 780 130 A1**
(43) Date of publication of application: **22.07.2026**
(21) Application number: 24884772.5
(22) Date of filing: 30.10.2024
(51) Int. Cl.: H04W 76/11

(54) **COMMUNICATION METHOD, COMMUNICATION APPARATUS AND COMPUTER-READABLE STORAGE MEDIUM**

(30) Priority: 31.10.2023 CN 202311440161
(71) Applicant: HUAWEI TECHNOLOGIES CO., LTD., Shenzhen, Guangdong 518129 (CN)
(72) Inventor: YAO, Qi, Shenzhen, Guangdong 518129 (CN); WU, Shaoyun, Shenzhen, Guangdong 518129 (CN); XING, Weijun, Shenzhen, Guangdong 518129 (CN); XUE, Yifei, Shenzhen, Guangdong 518129 (CN)
(74) Representative: MERH-IP Matias Erny Reichl Hoffmann Patentanwälte PartG mbB
(86) International application number: PCT/CN2024/128312
(87) International publication number: WO 2025/092770

(57) **Abstract**

This application discloses a communication method, a communication apparatus, and a computer-readable storage medium. This application may be applied to a communication system in which a control plane (control plane) and a user plane (user plane) are separated. The method includes: receiving a first message, where the first message includes identification information of a first application, and the first application is an application to be accessed by a terminal device; and establishing a forwarding tunnel between a first user plane function and a second user plane function, where the first user plane function is a user plane function that provides a service to the terminal device, and the second user plane function is associated with a first data network (data network, DN) in which the first application is deployed. Quality of service of accessing the first application in the first DN by the terminal device through the second user plane function (namely, the forwarding tunnel) is better than that of accessing the first application through another user plane function.

## Description

This application claims priority to Chinese Patent Application No. 202311440161.8, filed with the China National Intellectual Property Administration on October 31, 2023, and entitled "COMMUNICATION METHOD, COMMUNICATION APPARATUS, AND COMPUTER-READABLE STORAGE MEDIUM", which is incorporated herein by reference in its entirety.

### TECHNICAL FIELD

This application relates to the communication field, and in particular, to a communication method, a communication apparatus, and a computer-readable storage medium.

### BACKGROUND

A 5G core network separates a control plane (control plane) from a user plane (user plane). Functions of the control plane are carried by a plurality of network functions (network functions, NFs), and functions of the user plane are mainly carried by a user plane function (user plane function, UPF). Separation of the control plane and the user plane frees the functions of the user plane from a "centralization" constraint. In this way, the UPF can be deployed closer to a radio access network. Edge deployment of applications is dominated by over the top (over the top, OTT) services. In consideration of deployment costs and requirements, it is difficult for OTT to deploy edge clouds as extensively as operators. Most applications are still deployed in OTT-owned central clouds, which are far from radio access networks. Consequently, quality of service (quality of service, QoS) of the applications cannot be guaranteed.

Currently, services in application scenarios such as augmented reality (augmented reality, AR)/virtual reality (virtual reality, VR), high-definition live streaming, and industrial control usually have QoS requirements for ultra-low latency and high bandwidth. To meet QoS requirements such as ultra-low latency and high bandwidth of services, a solution for improving quality of service of accessing an application by a terminal device needs to be studied.

### SUMMARY

Embodiments of this application disclose a communication method, a communication apparatus, and a computer-readable storage medium, to improve quality of service of accessing an application by a terminal device.

According to a first aspect, an embodiment of this application provides a communication method. The method includes: receiving a first message, where the first message includes identification information of a first application, and the first application is an application to be accessed by a terminal device; and establishing a forwarding tunnel between a first user plane function and a second user plane function, where the first user plane function is a user plane function that provides a service to the terminal device, and the second user plane function is associated with a first data network (data network, DN) in which the first application is deployed. In this specification, an entity corresponding to the user plane function may be a user plane function network element (namely, a core network device), or may be a chip in the user plane function network element.

**In** this embodiment of this application, the forwarding tunnel between the first user plane function and the second user plane function is established, so that the terminal device accesses the first application in the first DN through the second user plane function. A path between the first user plane function and the second user plane function may alternatively be guaranteed using a QoS guarantee mechanism. In addition, because the second user plane function is associated with the first data network, latency of a path from the second user plane function to the first data network is negligible. In addition, quality of service of accessing the first application in the first DN by the terminal device through the first user plane function and the second user plane function is better than that of accessing the first application through another user plane function, to improve quality of service of accessing the application by the terminal device.

**In** a possible implementation, the method further includes: receiving a second message, where the second message includes information about an application deployed in the first DN. The method may further include: storing, based on the second message, the information about the application deployed in the first DN.

**In** this implementation, the second message may be received, so that the information about the application deployed in the first DN can be obtained, thereby facilitating subsequent determining of applications of which access requires access of the first DN.

**In** a possible implementation, the method further includes: obtaining an association relationship between the first DN and the second user plane function.

**In** this implementation, the association relationship between the first DN and the second user plane function is obtained, thereby facilitating subsequent determining to access the first DN through the second user plane function.

In a possible implementation, the method is applied to a session management function; and before receiving the second message, the method further includes: sending a third message to an application function controller network element, where the third message is used to obtain information about an application deployed in a DN managed by the application function controller network element, or the third message indicates the application function controller network element to send a notification to the session management function when the information about the application deployed in the DN managed by the application function controller network element changes.

In this implementation, the third message is sent to the application function controller network element, the session management function may subscribe to the information about the application deployed in the DN managed by the application function controller network element.

In a possible implementation, the first message is a session establishment request message from the terminal device, or the first message is a session establishment request message that is from the terminal device and that is forwarded by a core network element.

In this implementation, the first message is the session establishment request message from the terminal device. The forwarding tunnel between the first user plane function and the second user plane function is established based on the session establishment request message. An appropriate user plane function may be selected when a session is established, and the quality of service of accessing the first application by the terminal device is guaranteed.

In a possible implementation, the first message is from the first user plane function, and the first message indicates that the first user plane function has received data of the first application.

In this implementation, the first message indicates that the first user plane function has received the data of the first application. After the first message is received, the forwarding tunnel between the first user plane function and the second user plane function is established. The forwarding tunnel between the first user plane function and the second user plane function may be established after it is identified that the first user plane function has received the data of the first application, thereby improving the quality of service of accessing the first application by the terminal device.

In a possible implementation, the method is applied to a session management function; and before receiving the first message, the method further includes: sending a fourth message, where the fourth message indicates the first user plane function to notify the session management function after the data of the first application is detected.

In this implementation, the fourth message is sent, so that the first user plane function notifies the session management function after the data of the first application is detected.

In a possible implementation, after receiving the first message, and before establishing the forwarding tunnel between the first user plane function and the second user plane function, the method further includes: determining the first DN in which the first application is deployed; and determining the second user plane function associated with the first DN.

In this implementation, the second user plane function associated with the first DN is determined, so that the first DN is accessed through the second user plane function, thereby improving the quality of service of accessing the first application by the terminal device.

In a possible implementation, determining the second user plane function associated with the first DN includes: determining, based on transmission performance between the first user plane function and a plurality of user plane functions associated with the first DN, the second user plane function associated with the first DN.

In this implementation, the second user plane function with good transmission performance is determined based on the transmission performance between the first user plane function and the one or more user plane functions associated with the first DN, thereby further improving the quality of service of accessing the first application by the terminal device.

In a possible implementation, establishing the forwarding tunnel between the first user plane function and the second user plane function includes: sending a first request message to the first user plane function, where the first request message is used by the first user plane function to allocate tunnel information; receiving a first response message, where the first response message carries first tunnel information allocated by the first user plane function; sending a second request message to the second user plane function, where the second request message is used to request the second user plane function to allocate tunnel information, and the second request message carries the first tunnel information; receiving a second response message, where the second response message carries second tunnel information allocated by the second user plane function; and sending a message carrying the second tunnel information to the first user plane function.

According to a second aspect, an embodiment of this application provides another communication method. The method includes: A first user plane function receives data of a first application;

the first user plane function establishes a forwarding tunnel between the first user plane function and a second user plane function, where the second user plane function is associated with a data network DN in which the first application is deployed; and the first user plane function transmits the data of the first application through the forwarding tunnel.

In this embodiment of this application, the first user plane function receives the data of the first application, and transmits the data of the first application through the forwarding tunnel between the first user plane function and the second user plane function, so that the terminal device can access, through the second user plane function, the DN in which the first application is deployed. Because the second user plane function is associated with the DN in which the first application is deployed, latency of a path from the second user plane function to the DN in which the first application is deployed is negligible, and quality of service can be effectively guaranteed. In addition, a path between the first user plane function and the second user plane function may alternatively be guaranteed using an existing QoS guarantee mechanism. Therefore, quality of service of accessing the first application in the first DN by the terminal device through the second user plane function is better than that of accessing the first application through another user plane function, to improve quality of service of accessing the application by the terminal device.

In a possible implementation, the method further includes: The first user plane function receives a fourth message, where the fourth message indicates the first user plane function to notify a session management function after the data of the first application is detected. The first user plane function sends a first message to the session management function, where the first message indicates that the first user plane function has received the data of the first application. For example, in response to the fourth message, when receiving the data of the first application, the first user plane function sends the first message to the session management function.

In this implementation, the first user plane function sends the first message to the session management function to indicate that the first user plane function has received the data of the first application.

According to a third aspect, an embodiment of this application provides a communication method. The method includes: generating a second message, where the second message includes information about an application deployed in a first DN, and a first application is deployed in the first DN; and sending the second message to a session management function network element, where the second message is used to determine a path through which a terminal device accesses the first application.

In this embodiment of this application, the second message is sent to the session management function network element, so that the session management function network element can obtain the information about the application deployed in the first DN.

In a possible implementation, the second message is used to determine a user plane function through which the terminal device accesses the first application, and the user plane function is associated with the first DN.

In this implementation, the second message is used to determine the user plane function through which the terminal device accesses the first application, so that the session management function network element determines to access the first application through the user plane function associated with the first DN, thereby improving quality of service of accessing the first application.

According to a fourth aspect, an embodiment of this application provides a communication method. The method includes: sending a session establishment request message, where the session establishment request message includes identification information of a first application; and transmitting data of the first application through a first session connection, where the first session connection includes a connection between a terminal device and a radio access network, a forwarding tunnel between the radio access network and a first user plane function, and a forwarding tunnel between the first user plane function and a second user plane function, the first user plane function serves the terminal device, and the second user plane function is associated with a DN in which the first application is deployed.

In this embodiment of this application, the data of the first application is transmitted through the first session connection. The first session connection includes the connection between the terminal device and the radio access network, the forwarding tunnel between the radio access network and the first user plane function, and the forwarding tunnel between the first user plane function and the second user plane function. Because the second user plane function is associated with the DN in which the first application is deployed, latency of a path from the second user plane function to the DN in which the first application is deployed is negligible, and quality of service can be effectively guaranteed. In addition, a path between the first user plane function and the second user plane function may alternatively be guaranteed using an existing QoS guarantee mechanism. Therefore, the terminal device transmits the data of the first application through the first session connection. That is, quality of service of accessing the first application by the terminal device can be ensured.

According to a fifth aspect, an embodiment of this application provides a communication apparatus. The communication apparatus has a function of implementing behavior in the method embodiment in the first aspect. The communication apparatus may be a network device, or may be a component (for example, a processor, a chip, or a chip system) of the network device, or may be a logic module or software that can implement all or a part of functions of the network device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver module and a processing module. The transceiver module is configured to receive a first message, where the first message includes identification information of a first application, and the first application is an application to be accessed by a terminal device. The processing module is configured to establish a forwarding tunnel between a first user plane function and a second user plane function, where the first user plane function is a user plane function that provides a service to the terminal device, and the second user plane function is associated with a first DN in which the first application is deployed.

In a possible implementation, the transceiver module is further configured to receive a second message, where the second message includes information about an application deployed in the first DN. Optionally, the processing module is further configured to store, based on the second message, the information about the application deployed in the first DN.

In a possible implementation, the processing module is further configured to obtain an association relationship between the first DN and the second user plane function.

In a possible implementation, the communication apparatus is a session management function; and the transceiver module is further configured to send a third message to an application function controller network element, where the third message is used to obtain information about an application deployed in a DN managed by the application function controller network element, or the third message indicates the application function controller network element to send a notification to the session management function when the information about the application deployed in the DN managed by the application function controller network element changes.

In a possible implementation, the communication apparatus is a session management function; and the transceiver module is further configured to send a fourth message, where the fourth message indicates the first user plane function to notify the session management function after the data of the first application is detected.

In a possible implementation, the processing module is further configured to: determine the first DN in which the first application is deployed; and determine the second user plane function associated with the first DN.

In a possible implementation, the processing module is further configured to determine, based on transmission performance between the first user plane function and a plurality of user plane functions associated with the first DN, the second user plane function associated with the first DN.

In a possible implementation, the processing module is further configured to send a first request message to the first user plane function using the transceiver module, where the first request message is used by the first user plane function to allocate tunnel information. The transceiver module is configured to receive a first response message, where the first response message carries first tunnel information allocated by the first user plane function. The processing module is further configured to send a second request message to the second user plane function using the transceiver module, where the second request message is used to request the second user plane function to allocate tunnel information, and the second request message carries the first tunnel information. The transceiver module is configured to receive a second response message, where the second response message carries second tunnel information allocated by the second user plane function. The processing module is further configured to send a message carrying the second tunnel information to the first user plane function using the transceiver module.

For possible implementations of the communication apparatus in the fifth aspect, refer to the possible implementations of the first aspect.

For technical effects brought by the possible implementations of the fifth aspect, refer to descriptions of technical effects of the possible implementations of the first aspect.

According to a sixth aspect, an embodiment of this application provides a communication apparatus. The communication apparatus has a function of implementing behavior in the method embodiment in the second aspect. The communication apparatus may be a network device, or may be a component (for example, a processor, a chip, or a chip system) of the network device, or may be a logic module or software that can implement all or a part of functions of the network device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver module and a processing module. The transceiver module is configured to receive data of a first application. The processing module is configured to establish a forwarding tunnel between a first user plane function and a second user plane function. The second user plane function is associated with a data network DN in which the first application is deployed. The transceiver module is configured to transmit data of the first application through the forwarding tunnel.

In a possible implementation, the transceiver module is further configured to: receive a fourth message, where the fourth message indicates the first user plane function to notify a session management function after the data of the first application is detected; and send a first message to the session management function, where the first message indicates that the first user plane function has received the data of the first application.

For possible implementations of the communication apparatus in the sixth aspect, refer to the possible implementations of the second aspect.

For technical effects brought by the possible implementations of the sixth aspect, refer to descriptions of technical effects of the possible implementations of the second aspect.

According to a seventh aspect, an embodiment of this application provides a communication apparatus. The communication apparatus has a function of implementing behavior in the method embodiment in the third aspect. The communication apparatus may be a network device, or may be a component (for example, a processor, a chip, or a chip system) of the network device, or may be a logic module or software that can implement all or a part of functions of the network device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver module and a processing module. The processing module is configured to generate a second message, where the second message includes information about an application deployed in a first DN, and a first application is deployed in the first DN. The transceiver module is configured to send the second message to a session management function network element, where the second message is used to determine a path through which a terminal device accesses the first application.

For possible implementations of the communication apparatus in the seventh aspect, refer to the possible implementations of the third aspect.

For technical effects brought by the possible implementations of the seventh aspect, refer to descriptions of technical effects of the possible implementations of the third aspect.

According to an eighth aspect, an embodiment of this application provides a communication apparatus. The communication apparatus has a function of implementing behavior in the method embodiment in the fourth aspect. The communication apparatus may be a terminal device, or may be a component (for example, a processor, a chip, or a chip system) of the terminal device, or may be a logic module or software that can implement all or a part of functions of the terminal device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver module and a processing module. The processing module is configured to generate a session establishment request message. The transceiver module is configured to send a session establishment request message, where the session establishment request message includes identification information of a first application; and transmit data of the first application through a first session connection, where the first session connection includes a connection between a terminal device and a radio access network, a forwarding tunnel between the radio access network and a first user plane function, and a forwarding tunnel between the first user plane function and a second user plane function, the first user plane function serves the terminal device, and the second user plane function is associated with a DN in which the first application is deployed, or the first session connection includes the connection between the terminal device and the radio access network and a forwarding tunnel between the radio access network and the second user plane function, and the second user plane function is associated with the DN in which the first application is deployed.

For possible implementations of the communication apparatus in the eighth aspect, refer to the possible implementations of the fourth aspect.

For technical effects brought by the possible implementations of the eighth aspect, refer to descriptions of technical effects of the possible implementations of the fourth aspect.

According to a ninth aspect, an embodiment of this application provides another communication apparatus. The communication apparatus includes one or more processors, and the one or more processors are configured to process data or signaling to implement the method according to any one of the first aspect to the fourth aspect.

Optionally, the communication apparatus further includes a memory, and the memory stores a program or instructions. When the program or the instructions are executed by the processor, the communication apparatus is enabled to perform the method according to the first aspect or the second aspect. For example, the communication apparatus may be a chip, the processor is a processing circuit in the chip, and the memory is a random access memory or a cache in the chip.

In a possible implementation, in a process of performing the foregoing methods, a process of sending information (or a signal) in the foregoing methods may be understood as a process of outputting information based on instructions of the processor. When the information is output, the processor outputs the information to a transceiver, so that the transceiver transmits the information. After the information is output by the processor, other processing may be further performed on the information before the information arrives at the transceiver. Similarly, when the processor receives input information, the transceiver receives the information, and inputs the information to the processor. Further, after the transceiver receives the information, other processing may be performed on the information before the information is input into the processor.

An operation such as sending and/or receiving involved in the processor may be generally understood as an instruction output based on the processor if there is no special description, or if the operation does not conflict with an actual function or internal logic of the operation in a related description.

In an implementation process, the processor may be a processor specially configured to perform these methods, or may be a processor, for example, a general-purpose processor that executes computer instructions in a memory to perform these methods. For example, the processor may be further configured to execute a program stored in the memory. When the program is executed, the communication apparatus is caused to perform the method according to the first aspect or any possible implementation of the first aspect.

In a possible implementation, the memory is located outside the communication apparatus. In a possible implementation, the memory is located inside the communication apparatus.

In a possible implementation, the processor and the memory may alternatively be integrated into one component. In other words, the processor and the memory may alternatively be integrated together.

In a possible implementation, the communication apparatus further includes the transceiver. The transceiver is configured to: receive a signal, send a signal, or the like.

According to a tenth aspect, this application provides another communication apparatus. The communication apparatus includes a processing circuit and an interface circuit. The interface circuit is configured to obtain data or output data. The processing circuit is configured to perform the method according to any one of the first aspect to the fourth aspect.

According to an eleventh aspect, this application provides a computer-readable storage medium. The computer-readable storage medium stores a computer program, and the computer program includes program instructions. When the program instructions are executed, a computer is enabled to perform the method according to any one of the first aspect to the fourth aspect.

According to a twelfth aspect, this application provides a computer program product. The computer program product includes a computer program, and the computer program includes program instructions. When the program instructions are executed, a computer is enabled to perform the method according to any one of the first aspect to the fourth aspect.

According to a thirteenth aspect, this application provides a chip, including a communication interface and a processor. The communication interface is configured to send and receive signals of the chip. The processor is configured to execute computer program instructions, so that a communication apparatus including the chip performs the method according to any one of the first aspect to the fourth aspect.

According to a fourteenth aspect, an embodiment of this application provides a communication system, including the communication apparatus according to any one of the fifth aspect or the possible implementations of the fifth aspect and the communication apparatus according to any one of the eighth aspect or the possible implementations of the eighth aspect. Optionally, the communication system further includes the communication apparatus according to any one of the seventh aspect or the possible implementations of the seventh aspect. Optionally, the communication system further includes the communication apparatus according to any one of the sixth aspect or the possible implementations of the sixth aspect.

### BRIEF DESCRIPTION OF DRAWINGS

To describe the technical solutions in embodiments of this application or in the background more clearly, the following briefly describes the accompanying drawings for describing embodiments of this application or the background.
FIG. 1 shows an example of a system architecture to which a technical solution according to this application is applicable;
FIG. 2 is an interaction flowchart of a communication method according to an embodiment of this application;
FIG. 3 is an interaction flowchart of another communication method according to an embodiment of this application;
FIG. 4 is an interaction flowchart of another communication method according to an embodiment of this application;
FIG. 5 is an interaction flowchart of another communication method according to an embodiment of this application;
FIG. 6 is an interaction flowchart of another communication method according to an embodiment of this application;
FIG. 7 is an interaction flowchart of another communication method according to an embodiment of this application;
FIG. 8 is a diagram of a structure of a communication apparatus 800 according to an embodiment of this application; and
FIG. 9 is a diagram of a structure of another apparatus 90 according to an embodiment of this application.

### DESCRIPTION OF EMBODIMENTS

Terms "first", "second", and the like in the specification, claims, and accompanying drawings of this application are merely used to distinguish between different objects, and are not used to describe a specific order. It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes. In addition, terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

"Embodiments" mentioned in this specification mean that specific features, structures, or characteristics described in combination with the embodiments may be included in at least one embodiment of this application. The phrase shown in various locations herein may not necessarily refer to a same embodiment, and is not an independent or optional embodiment exclusive from another embodiment. It may be understood explicitly and implicitly by a person skilled in the art that the embodiments described herein may be combined with other embodiments.

Terms used in the following embodiments of this application are merely intended to describe specific embodiments, but are not intended to limit this application. The terms "one", "a", "an", "the", and "this" of singular forms used in this specification and the appended claims of this application are also intended to include plural forms, unless otherwise specified in the context clearly. It should also be understood that the term "and/or" used in this application means and includes any or all possible combinations of one or more listed items. For example, "A and/or B" may represent three cases: Only A exists, only B exists, and both A and B exist, where A and B may be singular or plural. The term "a plurality of" used in this application means two or more. In text descriptions of this application, the character "/" usually indicates an "or" relationship between associated objects.

It may be understood that in embodiments of this application, "B corresponding to A" indicates that there is a correspondence between A and B, and B may be determined based on A. However, it should be further understood that determining (or generating) B based on (or according to) A does not mean that B is determined (or generated) only based on (or according to) A, and B may alternatively be determined (or generated) based on (or according to) A and/or other information.

It should be understood that, in this application, the indication includes a direct indication (also referred to as an explicit indication) and an implicit indication. Directly indicating information A means including the information A. Implicitly indicating the information A means indicating the information A by directly indicating information B and based on a correspondence between the information A and the information B. The correspondence between the information A and the information B may be predefined, prestored, pre-burned, or preconfigured.

It should be understood that, in this application, that information C is used to determine information D includes that the information D is determined only based on the information C, and also includes that the information D is determined based on the information C and other information. In addition, that information C is used to determine information D may further include an indirect determining case. For example, the information D is determined based on information E, and the information E is determined based on the information C.

In addition, in embodiments of this application, that "a network element A sends information A to a network element B" may be understood as that a destination end of the information A or an intermediate network element in a transmission path between the network element A and the destination end is the network element B, and may include directly or indirectly sending information to the network element B; and that "a network element B receives information A from a network element A" may be understood as that a source end of the information A or an intermediate network element in a transmission path between the network element B and the source end is the network element A, and may include directly or indirectly receiving information from the network element A. The information may undergo necessary processing, for example, a format change, between the source end for sending the information and the destination end. However, the destination end may understand valid information from the source end. Similar descriptions in this application may be understood similarly, and details are not described herein.

A transmission path through which a terminal device accesses an OTT application includes an air interface (from the terminal device to a base station), a path from a base station to an anchor UPF (anchor UPF, A-UPF), and a path from the anchor UPF to a cloud. A relatively complete quality of service (quality of service, QoS) guarantee mechanism is defined for the air interface (from the terminal device to the base station) and the path from the base station to the anchor UPF. A best-effort IP transmission mechanism is mostly used for the path from the anchor UPF to the cloud, and QoS cannot be ensured. In other words, a main factor that affects quality of service of accessing a data network (data network, DN) by the terminal device in a communication system (for example, a 5G communication system) is that the QoS of the path from the anchor UPF to the cloud (namely, the data network) cannot be ensured. When a distance between the UPF to which the terminal device is connected and the data network accessed by the terminal device is long, transmission performance of accessing the data network by the terminal device is typically poor, for example, with long latency. A main idea of the technical solutions provided in this application is: A UPF is locally deployed in a data network, that is, the UPF is deployed close to the data network, and a terminal device accesses the data network using the UPF locally deployed in the data network. In this specification, the UPF locally deployed in the data network may be referred to as an associated UPF of the data network, that is, a UPF associated with the data network. Because the associated UPF of the data network is deployed close to the data network, that is, the UPF is closer to the data network than other UPFs, latency is nearly negligible, and costs of guaranteeing bandwidth are also very low. Therefore, quality of service of a path between the UPF and the data network is better than that of paths between the other UPFs and the data network. Quality of service of a path between the terminal device and the associated UPF of the data network can ensure QoS, and the quality of service of the path between the UPF and the data network is better than the quality of service of the paths between the other UPFs and the data network. Therefore, by accessing the data network using the UPF locally deployed in the data network, the terminal device can achieve improved quality of service.

The following describes a system architecture to which the technical solutions provided in this application are applicable. The technical solutions provided in this application are applicable to a communication system including a terminal device, an access network device, a UPF, a data network, a session management function network element, and an application function controller (AF controller) network element. The UPF and the session management function network element may be replaced with network elements with similar functions. This is not limited in this application. The application function controller network element is responsible for maintaining an application (application, APP) deployed in the DN, and the AF controller may belong to an application service provider (over the top provider, OTT provider) or may belong to an operator. An entity of the AF controller may be an application enabler server (application enabler server) network element or the like. For example, the technical solutions provided in this application may be applied to a communication system evolved after 5G such as a 5^{th} generation (5^{th} generation, 5G) or new radio (new radio, NR) system, a 6^{th} generation (6^{th} generation, 6G) mobile communication system, and another communication system including a core network in which a control plane is separated from a user plane.

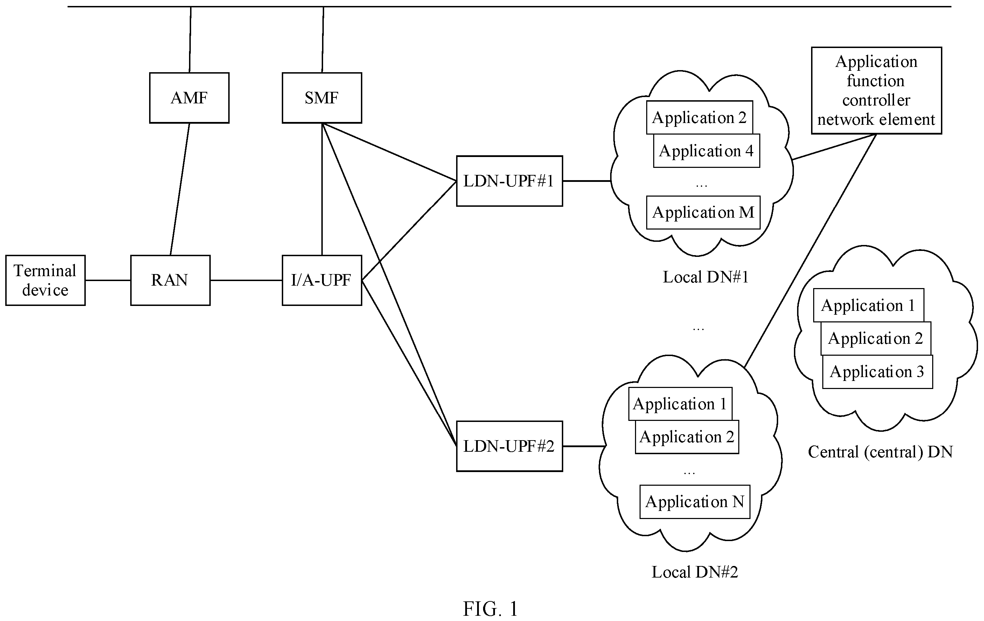

FIG. 1 shows an example of a system architecture to which a technical solution according to this application is applicable. As shown in FIG. 1, the system architecture includes one or more terminal devices (only one terminal device is shown), a radio access network (radio access network, RAN node), a plurality of UPFs (only an I/A-UPF, an LDN-UPF#1, and an LDN-UPF#2 are shown), one or more DNs (only a local DN#1, a local DN#2, and a central (central) DN), an access and mobility management function (access and mobility management function, AMF) network element, a session management function (session management function, SMF) network element, and an AF controller. The LDN-UPF#1 is associated with the local DN#1, and the LDN-UPF#2 is associated with the local DN#2. The AF controller is responsible for maintaining applications deployed in DNs (including the local DN#1 and the local DN#2). Applications deployed in the local DN#1 include an application 2, an application 4, and an application M, and applications running on the local DN#2 include an application 1, the application 2, and an application N. I-UPF is short for intermediate UPF (intermediate UPF), and A-UPF is short for anchor-UPF (anchor-UPF). The I-UPF is connected to the RAN node, the A-UPF is a UPF of a session anchor, the A-UPF may also be referred to as a protocol data unit (protocol data unit, PDU) session anchor (PDU session anchor, PSA), and the PSA is connected to the DN. Applications deployed in the central DN include the application 1, the application 2, an application 3, and the like. A path through which the terminal device accesses the application 4 may be terminal device-RAN node-(I/A-UPF)-(LDN-UPF#1)-local DN#1, and a path through which the terminal device accesses the application 1 may be terminal device-RAN node-(I/A-UPF)-(LDN-UPF#2)-local DN#2. Main functions provided by the AMF network element are as follows: registration management, connectivity management, reachability management, mobility management, access authentication and authorization, message transmission, a security anchor function, and positioning service management. The session management function provides the following main functions: session management: PDU session establishment/update/deletion; user equipment (user equipment, UE) internet Protocol (internet protocol, IP) address allocation and management; user plane function (user plane function, UPF) network element selection and control; service flow direction configuration on the UPF network element to route service flows to appropriate destinations; downlink data notification; determining a session and service continuity (session and service continuity, SSC) mode of a session; and roaming function. The UPF is mainly responsible for forwarding and receiving user data, and may receive user data from a data network, and transmit the user data to the UE through the access network device; or may receive user data from the UE through the access network device, and forward the user data to the data network. The system architecture shown in FIG. 1 may further include another network element. In addition, data of each network element in the system architecture shown in FIG. 1 is not limited in embodiments of this application. The local DN#1 and/or the local DN#2 in FIG. 1 may be replaced with central DNs. For example, the local DN#1 may be replaced with a central DN, and a path through which the terminal device accesses the application 3 is: terminal device-RAN node-(I/A-UPF)-(LDN-UPF#1)-central DN.

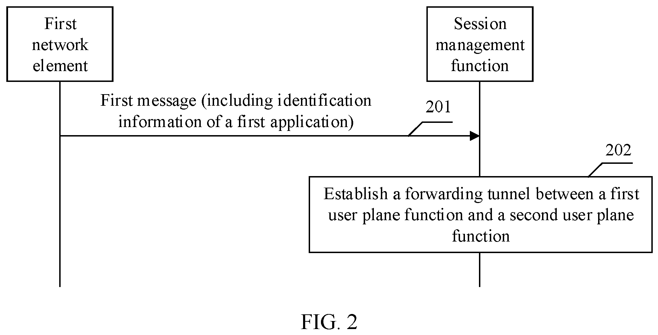

The technical solutions provided in this application are applicable to a communication system in which a core network separates a user plane from a control plane, to improve quality of service of accessing an application by a terminal device. The following describes, with reference to FIG. 2, the technical solutions provided in this application. FIG. 2 is an interaction flowchart of a communication method according to an embodiment of this application. As shown in FIG. 2, the method includes the following steps.

201: A first network element sends a first message to a session management function.

Correspondingly, the session management function receives the first message from the first network element. The first message includes identification information of a first application, and the first application is an application to be accessed by a terminal device. The session management function may provide the following main function: session management, namely, PDU session establishment/ update/deletion/the like. The session management function may be named differently in different communication systems. In this specification, an entity corresponding to the session management function may be a session management function network element (for example, a core network device), or may be a chip in the session management function. It is uniformly noted herein that, that a network element (for example, a first network element) sends a message to a function (for example, the session management function) means that the network element sends the message to an entity of the function, and that a function sends a message means that an entity of the function sends the message.

The identification information of the first application may be one or more of the following: an identifier, an IP, a fully qualified domain name (fully qualified domain name, FQDN), and the like of the first application.

In a possible implementation, the first network element is the terminal device, and the first message is a session establishment request message, namely, a message used to request to establish a session for accessing the first application.

In another possible implementation, the first network element is a first user plane function (for example, a user plane function that provides a service to the terminal device), and the first message indicates that the first user plane function has received data of the first application from the terminal device.

202: The session management function establishes a forwarding tunnel between the first user plane function and a second user plane function.

The first user plane function is a user plane function that provides a service to the terminal device. For example, the terminal device is within a service area of the first user plane function. The second user plane function is associated with a first DN in which the first application is deployed.

A possible implementation of step 202 is as follows: The session management function sends a first request message to the first user plane function, where the first request message is used by the first user plane function to allocate tunnel information; the session management function receives a first response message from the first user plane function, where the first response message carries first tunnel information allocated by the first user plane function; the session management function sends a second request message to the second user plane function, where the second request message is used to request the second user plane function to allocate tunnel information, and the second request message carries the first tunnel information; the session management function receives a second response message from the second user plane function, where the second response message carries second tunnel information allocated by the second user plane function; and the session management function sends a message carrying the second tunnel information to the first user plane function. The session management function may alternatively establish the forwarding tunnel between the first user plane function and the second user plane function in another manner. This is not limited in this application.

In this embodiment of this application, the session management function establishes the forwarding tunnel between the first user plane function and the second user plane function, so that the terminal device accesses the first application in the first DN through the second user plane function. Because the second user plane function is associated with the first data network, latency of a path from the second user plane function to the first data network is negligible, and quality of service can be effectively guaranteed. In addition, the path between the first user plane function and the second user plane function may alternatively be guaranteed using an existing QoS guarantee mechanism. Therefore, quality of service of accessing the first application in the first DN by the terminal device through the second user plane function is better than that of accessing the first application through another user plane function, to improve quality of service of accessing the application by the terminal device.

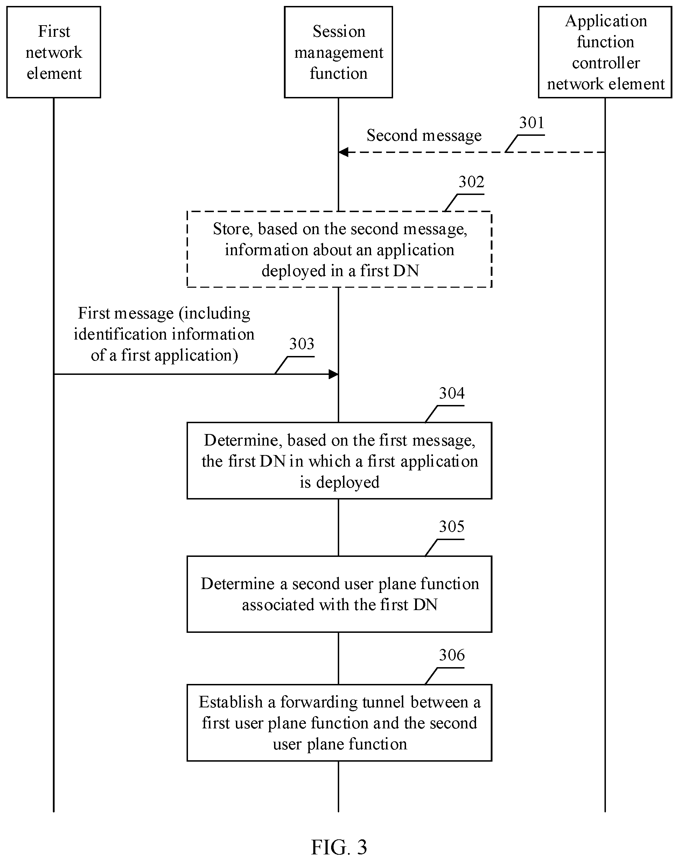

FIG. 3 is an interaction flowchart of another communication method according to an embodiment of this application. A method procedure in FIG. 3 is a possible implementation of the method described in FIG. 2. In this implementation, when receiving a first message (including identification information of a first application), a session management function determines a second user plane function associated with a first DN (in which a first application is deployed), and establishes a forwarding tunnel between a first user plane function (serving a terminal device) and the second user plane function, to improve quality of service of accessing a first application by a terminal device. As shown in FIG. 3, the method includes the following steps.

301: An application function controller network element sends a second message to the session management function.

Correspondingly, the session management function receives the second message from the application function controller network element. The second message includes information about an application deployed in the first DN. For example, the first application is deployed in the first DN.

An example of step 301 is as follows: The application function controller network element sends, to the session management function, information about an application deployed in one or more DNs (or information about an application), and the application function controller network element is responsible for maintaining the application deployed in the one or more DNs. Step 301 is optional.

In a possible implementation, the session management function sends a third message to the application function controller network element, where the third message is used to obtain information about an application deployed in a DN managed by the application function controller network element, or the third message indicates the application function controller network element to send a notification when the information about the application deployed in the DN managed by the application function controller network element changes; and the application function controller network element sends the second message to the session management function based on the third message. For example, the third message may be a subscription request message.

The session management function may alternatively obtain, in another manner, the information about the application deployed in the first DN. This is not limited in this application. The application function controller network element can support centralized deployment or distributed deployment (namely, different DNs are controlled and managed by different AF controllers). If the application function controller network element can support centralized deployment, the application function controller network element may send, to the session management function, information about applications deployed in DNs managed by the application function controller network element. If the application function controller network element supports distributed deployment, a plurality of application function controller (AF controller) network elements may send, to the session management function, information about applications deployed in DNs managed by the plurality of the application function controller network elements.

In a possible implementation, the application function controller network element sends, to a session management function (for example, a session management function) near the first DN, the information (namely, the second message) about the application deployed in the first DN. For example, after the session management function near the first DN sends the third message to the application function controller network element, the application function controller network element sends the information about the application deployed in the first DN to the session management function near the first DN. The first DN may cover or serve a specific area, and the session management function may also cover or serve a specific area. In other words, the first DN and the session management function each have a specific service area attribute. The session management function near the first DN means that service areas of the first DN and the session management function have an intersecting area or an overlapping area. In this implementation, only the session management function near the first DN obtains the information about the application deployed in the first DN. This can prevent all session management functions from interacting with the application function controller network element, thereby reducing signaling interaction, and can also save storage resources of the session management function.

302: The session management function stores, based on the second message, the information about the application deployed in the first DN.

Step 302 is optional. In the method procedure in FIG. 3, a function of step 301 and step 302 is to enable the session management function to store the information about the application deployed in the first DN (another DN may be further included). After the session management function stores the information about the application deployed in the first DN (another DN may be included) and before the information about the application deployed in the first DN changes, the application function controller network element does not need to send the second message to the session management function. In other words, the method procedure in FIG. 3 may not include step 301 and step 302. A possible implementation of step 302 is as follows: The session management function (for example, the session management function) stores, in a unified data repository (unified data repository, UDR)/unified data management (unified data management, UDM)/policy control function (policy control function, PCF), the information about the application deployed in the one or more DNs (including the first DN), and the session management function subsequently obtains the information about the application deployed in the DN from the UDR/UDM/PCF.

303: A first network element sends the first message to the session management function.

Correspondingly, the session management function receives the first message from the first network element. For step 303, refer to step 201. The session management function may obtain, by receiving the first message from the first network element, that the terminal device is to access the first application.

304: The session management function determines, based on the first message, the first DN in which the first application is deployed.

Step 304 may be replaced with the following: The session management function determines the first DN in which the first application is deployed. For example, the session management function may determine, based on the identification information of the first application, a DN/DNs in which the first application is deployed. For example, if the first application is deployed in a plurality of DNs (which may include a local DN and a central DN), the session management function may determine, based on factors such as load, latency, and the like of the plurality of DNs, which DN is to be selected, or may determine, in another manner, which DN is to be selected. This is not limited in this embodiment of this application.

305: The session management function determines the second user plane function associated with the first DN.

The session management function may determine, based on an association relationship (or a mapping relationship) between the first DN and the second user plane function, the second user plane function associated with the first DN.

In a possible implementation, an association relationship (or a mapping relationship) between the first DN and the second user plane function may be preconfigured in the session management function. Optionally, management personnel may directly configure (understood as a static manner or a manual manner) an association relationship between a DN and a user plane function in the session management function, where the association relationship includes the association relationship between the first DN and the second user plane function. One DN may be associated with one user plane function, or may be associated with a plurality of user plane functions. In other words, one DN may have an association relationship with one user plane function, or may have an association relationship with a plurality of user plane functions.

In a possible implementation, the session management function sends, to another network element (for example, the UDR), a message used to request to obtain the association relationship between the first DN and the second user plane function. The message may carry an identifier of the first DN. The session management function may subsequently receive a response message for the message to obtain the association relationship between the first DN and the second user plane function.

When the first DN is associated with a plurality of user plane functions, a possible implementation of step 305 is as follows: determining, based on transmission performance between the plurality of user plane functions associated with the first DN and the first user plane function, the second user plane function associated with the first DN. For example, the session management function obtains the second user plane function that is in the plurality of user plane functions and that has the best transmission performance with the first user plane function. In this implementation, the second user plane function with the best transmission performance may be selected to further improve quality of service of an application provided for the terminal.

306: The session management function establishes the forwarding tunnel between the first user plane function and the second user plane function.

For step 306, refer to step 202 in FIG. 2.

In this embodiment of this application, when receiving the first message (including the identification information of the first application), the session management function determines the second user plane function associated with the first DN (in which the first application is deployed), and establishes the forwarding tunnel between the first user plane function (serving the terminal device) and the second user plane function, to improve the quality of service of accessing the first application by the terminal device.

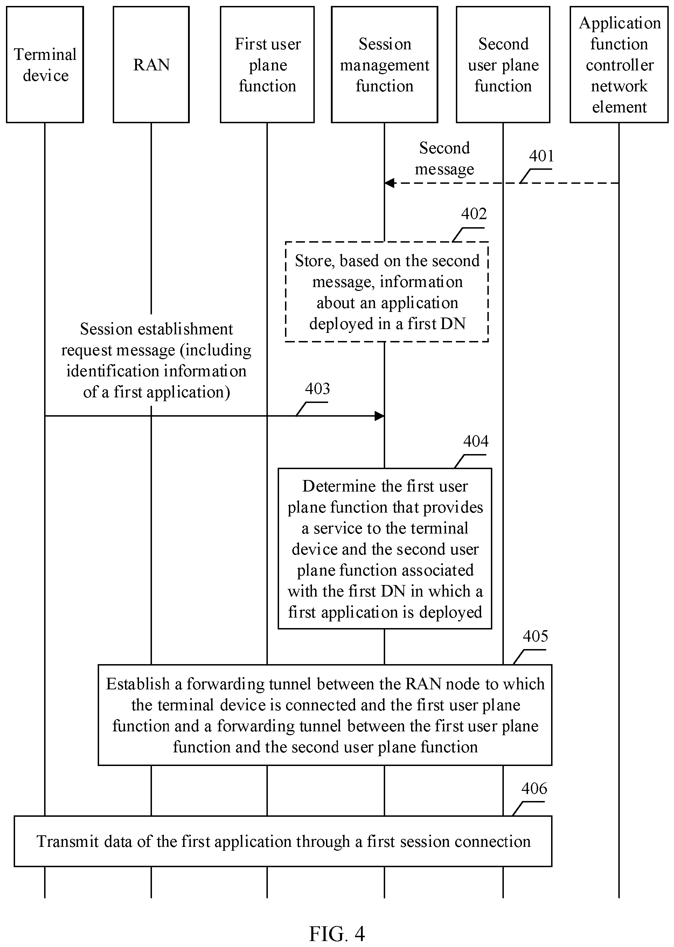

FIG. 4 is an interaction flowchart of another communication method according to an embodiment of this application. A method procedure in FIG. 4 is a possible implementation of the method described in FIG. 2 or FIG. 3. In this implementation, after receiving a session establishment request message (an example of the first message, including identification information of a first application), a session management function (an example of the session management function) determines a second user plane function associated with a first DN (in which a first application is deployed) to establish a forwarding tunnel between a first user plane function (serving a terminal device) and the second user plane function, so that an appropriate user plane function can be selected during session establishment, and quality of service of accessing a first application by a terminal device can be improved. As shown in FIG. 4, the method includes the following steps.

401: An application function controller network element sends a second message to the session management function.

Correspondingly, the session management function receives the second message from the application function controller network element. The session management function is an example of the session management function in FIG. 2.

402: The session management function stores, based on the second message, information about an application deployed in the first DN.

For step 401 and step 402, refer to step 301 and step 302 in FIG. 3. Step 401 and step 402 are optional.

403: The terminal device sends the session establishment request message to the session management function.

The session establishment request message includes identification information of the first application and location information of the terminal device, and the first application is an application to be accessed by the terminal device. The session establishment request message is an example of the first message in FIG. 2. For example, the terminal device sends the session establishment request message to the session management function using a RAN node.

404: The session management function determines the first user plane function that provides a service to the terminal device and the second user plane function associated with the first DN in which the first application is deployed.

A possible implementation of step 404 is as follows: The session management function determines, based on the location information of the terminal device and service areas of user plane functions, the first user plane function that provides a service to the terminal device, that is, the first user plane function serving the terminal device; determines, based on the identification information of the first application in the first message, the first DN in which the first application is deployed (referring to step 304); and determines the second user plane function associated with the first DN (referring to step 305).

That the session management function determines, based on the location information of the terminal device and the service areas of the user plane functions, the first user plane function that provides a service to the terminal device may be: The session management function determines, based on the location information of the terminal device and the service areas of the user plane functions, a service area of a user plane function in which the terminal device is located. A user plane function that includes a location of the terminal device within the service area is the first user plane function serving the terminal device.

In a possible implementation, the location information of the terminal device is identified using a RAN node to which the terminal device is connected, and the service areas of the user plane functions may alternatively be identified using covered RAN nodes. Therefore, the session management function may determine the first user plane function based on the location information of the terminal device and information about the service areas of the user plane functions. For example, the RAN node to which the terminal device is connected is a RAN node#1, RAN nodes covered by a service area of a user plane function#1 includes the RAN node#1, and the session management function determines that the user plane function#1 is the first user plane function that provides a service to the terminal device.

In a possible implementation, the location information of the terminal device is a coordinate point or a geographical area (for example, a circular area), the service areas of the user plane functions are a large geographical area (compared with the location information of the terminal device), and the session management function determines, based on the location information of the terminal device and the service areas of the user plane functions, a service area of a user plane function in which the terminal device is located. A user plane function that includes the location of the terminal device within the service area is the first user plane function serving the terminal device.

In a possible implementation, the location information of the terminal device is an administrative area (for example, a county or a city) in which the terminal device is located, and the service areas of the user plane functions are an administrative area. The session management function determines, based on the location information of the terminal device and the service areas of the user plane functions, a service area of a user plane function in which the terminal device is located. A user plane function that includes the location of the terminal device within the service area is the first user plane function serving the terminal device.

405: The session management function establishes a forwarding tunnel between the RAN node to which the terminal device is connected and the first user plane function and the forwarding tunnel between the first user plane function and the second user plane function.

Step 405 may be replaced with: The session management function establishes a forwarding tunnel: RAN node to which the terminal device is connected-first user plane function-second user plane function.

406: The terminal device transmits data of the first application through a first session connection.

The first session connection may include the forwarding tunnel between the RAN node to which the terminal device is connected and the first user plane function and the forwarding tunnel between the first user plane function and the second user plane function. A path for transmitting the data of the first application by the terminal device through the first session connection is: terminal device-RAN node to which the terminal device is connected-first user plane function-second user plane function-first DN.

In embodiments of this application, when the session management function (an example of the session management function) receives the session establishment request message, the session management function determines the second user plane function associated with the first DN (in which the first application is deployed) to establish the forwarding tunnel between the first user plane function (serving the terminal device) and the second user plane function, so that an appropriate user plane function can be selected during session establishment, and quality of service of accessing the first application by the terminal device can be improved.

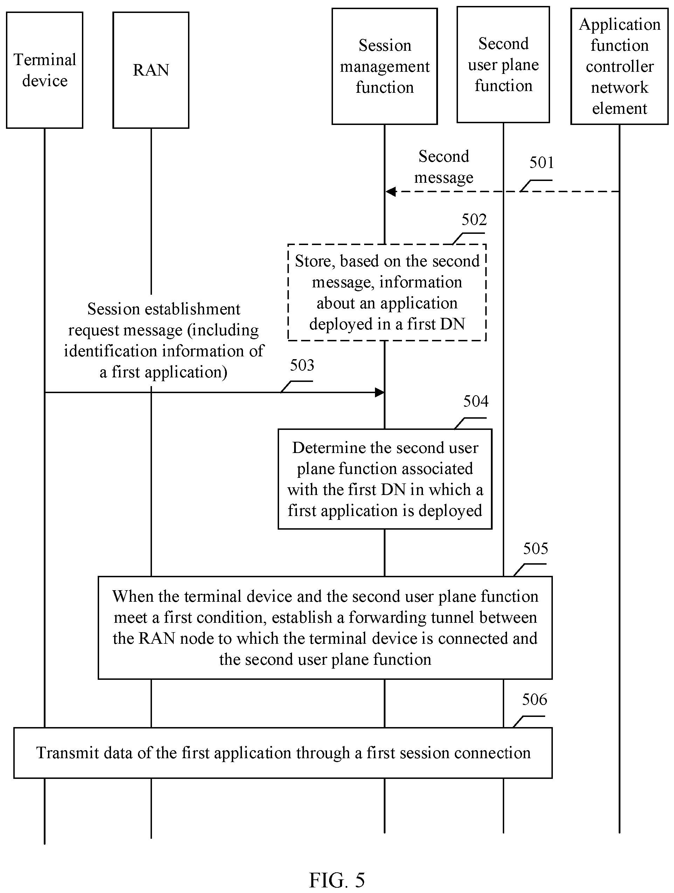

FIG. 5 is an interaction flowchart of another communication method according to an embodiment of this application. A method procedure in FIG. 5 is a possible implementation of the method described in FIG. 2 or FIG. 3. In this implementation, after receiving a session establishment request message (an example of the first message, including identification information of a first application), a session management function (an example of the session management function) determines a second user plane function associated with a first DN (in which a first application is deployed) to establish a forwarding tunnel between a RAN node to which a terminal device is connected and the second user plane function, so that an appropriate user plane function can be selected during session establishment, and quality of service of accessing a first application by the terminal device can be improved. As shown in FIG. 5, the method includes the following steps.

501: An application function controller network element sends a second message to the session management function. Correspondingly, the session management function receives the second message from the application function controller network element.

502: The session management function stores, based on the second message, information about an application deployed in the first DN.

Step 501 and step 502 are optional.

503: The terminal device sends the session establishment request message to the session management function.

Step 501 to step 503 may be the same as step 401 to step 403 in FIG. 4, respectively. Details are not described herein again.

504: The session management function determines the second user plane function associated with the first DN in which the first application is deployed.

505: When the terminal device and the second user plane function meet a first condition, the session management function establishes the forwarding tunnel between the RAN node to which the terminal device is connected and the second user plane function.

That the terminal device and the second user plane function meet the first condition may be: The terminal device is in a service area of the second user plane function. In other words, when the terminal device is within the service area of the second user plane function, the RAN node to which the UE is connected can be directly connected to the second user plane function.

In a possible implementation, if there are two session management functions (namely, a session management function 1 and a session management function 2), a session management function 1 establishes a forwarding tunnel: RAN node to which the terminal device is connected-first user plane function-second user plane function, and a session management function 2 establishes the forwarding tunnel between the RAN node to which the terminal device is connected and the second user plane function. In this example, the two session management functions may each establish a forwarding tunnel through which the terminal device accesses the first application, thereby improving reliability.

In a possible implementation, when the terminal device and the second user plane function do not meet the first condition, the session management function determines the first user plane function that provides a service to the terminal device, and establishes a forwarding tunnel between the first user plane function and the second user plane function. Specifically, refer to the method in FIG. 4.

506: The terminal device transmits data of the first application through a first session connection.

In step 505, if the session management function establishes the forwarding tunnel between the RAN node to which the terminal device is connected and the second user plane function, the first session connection may include a connection between the terminal device and the radio access network and a forwarding tunnel between the radio access network and the second user plane function, that is, the first session connection corresponds to a path of terminal device-RAN node-second user plane function.

If the session management function establishes the forwarding tunnel between the first user plane function and the second user plane function in step 505, the first session connection may include a connection between the terminal device and the radio access network, a forwarding tunnel between the radio access network and the first user plane function, and the forwarding tunnel between the first user plane function and the second user plane function, that is, the first session connection corresponds to a path of terminal device-RAN node-first user plane function-second user plane function.

In embodiments of this application, when the session management function receives the session establishment request message, the session management function determines the second user plane function associated with the first DN (in which the first application is deployed) to establish the forwarding tunnel between the RAN node to which the terminal device is connected and the second user plane function, so that an appropriate user plane function can be selected during session establishment, and the quality of service of accessing the first application by the terminal device can be improved. In addition, when the terminal device and the second user plane function meet the first condition, the session management function establishes the forwarding tunnel between the RAN node to which the terminal device is connected and the second user plane function without inserting an intermediate (Intermediate) UPF, namely, an I-UPF. Therefore, resources that need to be consumed to establish a forwarding tunnel between the I-UPF and the second user plane function can be saved, and performance of a transmission path can also be guaranteed.

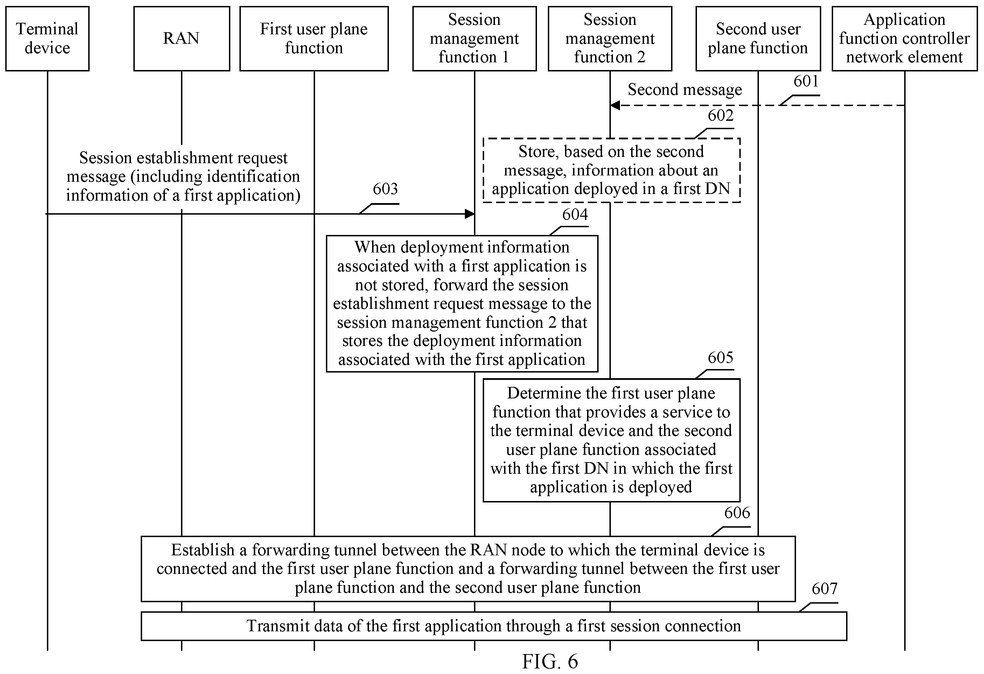

FIG. 6 is an interaction flowchart of another communication method according to an embodiment of this application. A method procedure in FIG. 6 is a possible implementation of the method described in FIG. 2 or FIG. 3. In this implementation, a session management function 1 receives a session establishment request message (an example of the first message, including identification information of a first application). If the session management function 1 does not store deployment information associated with a first application, that is, does not store information about a DN in which the first application is deployed, the session management function 1 forwards the session establishment request message to a session management function 2 that stores the deployment information associated with the first application, so that the session management function 2 determines a second user plane function associated with a first DN (in which the first application is deployed) to establish a forwarding tunnel between a RAN node to which a terminal device is connected and the second user plane function, so that an appropriate user plane function can be selected during session establishment, and quality of service of accessing the first application by the terminal device can be improved. As shown in FIG. 6, the method includes the following steps.

601: An application function controller network element sends a second message to the session management function 2. Correspondingly, the session management function 2 receives the second message from the application function controller network element. The second message includes information about an application deployed in the first DN.

In a possible implementation, the application function controller network element sends, to the session management function 2 near the first DN, the information about the application deployed in the first DN. For example, after receiving the foregoing third message sent by the session management function 2 near the first DN, the application function controller network element sends the information about the application deployed in the first DN to the session management function 2.

602: The session management function 2 stores, based on the second message, information about an application deployed in the first DN.

Step 601 and step 602 are optional. For step 601 and step 602, refer to step 301 and step 302 in FIG. 3.

603: The terminal device sends the session establishment request message to the session management function 1.

The session establishment request message includes identification information of the first application and location information of the terminal device, and the first application is an application to be accessed by the terminal device. The session establishment request message is an example of the first message in FIG. 2.

604: When the deployment information associated with the first application is not stored, the session management function 1 forwards the session establishment request message to the session management function 2 that stores the deployment information associated with the first application.

That the session management function 1 does not store the deployment information associated with the first application may be that the session management function 1 does not store information about an application deployed in any DN, or may be that the session management function 1 stores deployment information associated with another application but does not store the deployment information associated with the first application.

When the deployment information associated with the first application is not stored, the session management function 1 may search for the session management function 2 that stores the deployment information associated with the first application, and forward the session establishment request message to the session management function 2 that stores the deployment information associated with the first application. A possible manner in which the session management function 1 searches for a session management function that stores the deployment information associated with the first application is as follows: The session management function 1 sends a search request message to another network element (for example, a network repository function (network repository function, NRF) network element or an AF controller), where the search request message includes an identifier of the first application. Correspondingly, the another network element sends a response message to the session management function 1, where the response message includes identification information of the session management function 2, for example, an IP address, or a uniform resource locator (uniform resource locator, URL). The session management function 2 may be an example of the session management function in FIG. 2.

605: The session management function 2 determines a first user plane function that provides a service to the terminal device and the second user plane function associated with the first DN in which the first application is deployed.

606: The session management function 2 establishes a forwarding tunnel between the RAN node to which the terminal device is connected and the first user plane function and a forwarding tunnel between the first user plane function and the second user plane function.

In a possible implementation, step 605 is replaced with: The session management function 2 determines the second user plane function associated with the first DN in which the first application is deployed. Step 606 is replaced with: When the terminal device and the second user plane function meet a first condition, the session management function 2 establishes a forwarding tunnel between the RAN node to which the terminal device is connected and the second user plane function.

607: The terminal device transmits data of the first application through a first session connection.

In embodiments of this application, the session management function 1 receives the session establishment request message. When the session management function 1 does not store the deployment information associated with the first application, the session management function 1 forwards the session establishment request message to the session management function 2 that stores the deployment information associated with the first application. The session management function 2 determines the second user plane function associated with the first DN (in which the first application is deployed) to establish the forwarding tunnel between the first user plane function and the second user plane function, so that an appropriate user plane function can be selected during session establishment, and quality of service of accessing the first application by the terminal device can be improved.

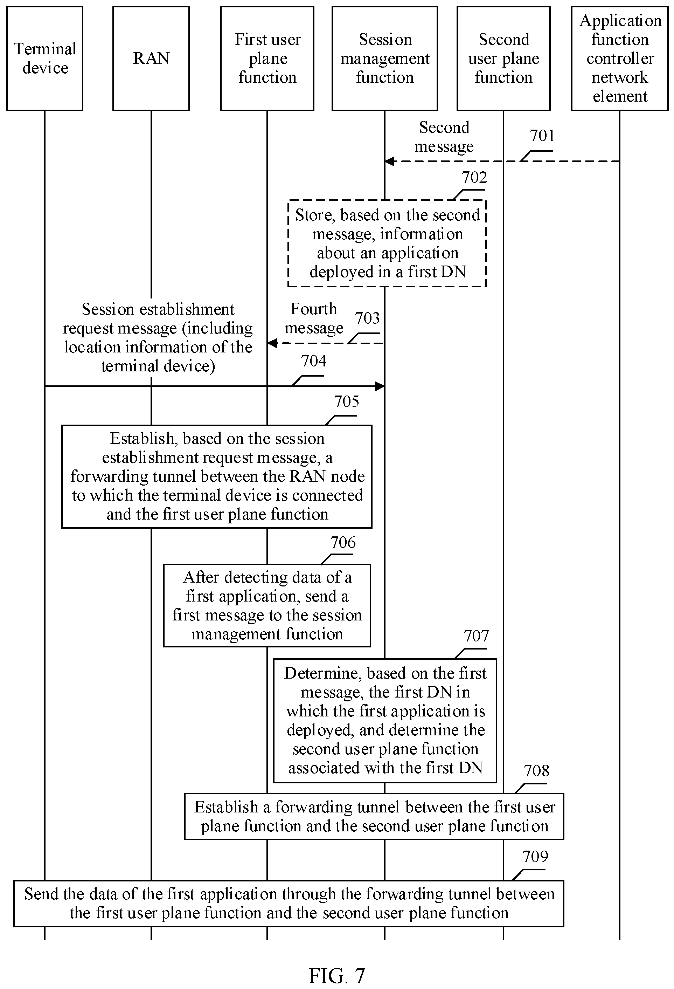

FIG. 7 is an interaction flowchart of another communication method according to an embodiment of this application. A method procedure in FIG. 7 is a possible implementation of the method described in FIG. 2 or FIG. 3. In this implementation, after a first user plane function to which a terminal device is connected detects a data packet of a first application, a session management function establishes a forwarding tunnel between the first user plane function and a second user plane function (associated with a DN in which the first application is deployed), so that the terminal device accesses an application through a path of RAN node-first user plane function-second user plane function. The forwarding tunnel may be re-established after session establishment, thereby improving quality of service of accessing the first application by the terminal device. As shown in FIG. 7, the method includes the following steps.

701: An application function controller network element sends a second message to the session management function. Correspondingly, the session management function receives the second message from the application function controller network element.

702: The session management function stores, based on the second message, information about an application deployed in a first DN.

Step 701 and step 702 are optional. For step 701 and step 702, refer to step 301 and step 302. The session management function is an example of the session management function in FIG. 2 and FIG. 3.

703. The session management function sends a fourth message to the first user plane function.

Correspondingly, the first user plane function receives the fourth message from the session management function. The fourth message indicates the first user plane function to notify the session management function after the data of the first application is detected. The fourth message may carry a reporting rule, and the rule is to notify the session management function when a user plane function detects the first application. The session management function may choose to deliver the fourth message (including the reporting rule) to one or more UPFs (including the first user plane function) within a service area of the session management function. For example, the service area of the session management function includes three UPFs: a UPF#1, a UPF#2, and a UPF#3, and each UPF may cover a different area. The session management function may choose, based on a policy (the policy is not limited in this application), to deliver the fourth message to one or more UPFs, or deliver the fourth message to all the UPFs managed by the session management function.

704: The terminal device sends a session establishment request message. Correspondingly, the session management function receives the session establishment request message from the terminal device.

For example, the terminal device sends the session establishment request message to the session management function using a RAN node. The session establishment request message may carry location information of the terminal device.

705: The session management function establishes, based on the session establishment request message, a forwarding tunnel between the RAN node to which the terminal device is connected and the first user plane function.

A possible implementation of step 705 is as follows: The session management function determines, based on the location information of the terminal device and the service areas of the UPFs, a first user plane function that provides a service to the terminal device, and establishes the tunnel between the RAN node and the first user plane function, so that the terminal device accesses an application (which may not include the first application) through a path of RAN node-first user plane function-central DN. The session management function may alternatively establish, in another manner, a forwarding tunnel between the RAN node to which the terminal device is connected and a user plane function. This is not limited herein.

706: After detecting data of the first application, the first user plane function sends a first message to the session management function.

The first application data is sent by the terminal device to the first user plane function using the RAN node. The first user plane function detects the data of the first application on the forwarding tunnel between the RAN node and the first user plane function.

The first message indicates that the first user plane function has received the data of the first application. The first message may include identification information of the first application, and the first application is an application to be accessed by the terminal device.

707: The session management function determines, based on the first message, the first DN in which the first application is deployed, and determines the second user plane function associated with the first DN.

For step 707, refer to step 304 and step 305 in FIG. 3.

708: The session management function establishes a forwarding tunnel between the first user plane function and the second user plane function.

For step 708, refer to step 202 in FIG. 2.

709: The first user plane function sends the data of the first application through the forwarding tunnel between the first user plane function and the second user plane function.

In embodiments of this application, after the first user plane function to which the terminal device is connected detects the data packet of the first application, the session management function establishes the forwarding tunnel between the first user plane function and the second user plane function (associated with the DN in which the first application is deployed), so that the terminal device accesses the application through the path of RAN node-first user plane function-second user plane function. The forwarding tunnel may be re-established after session establishment, thereby improving the quality of service of accessing the first application by the terminal device.

The following describes, with reference to the accompanying drawings, structures of communication apparatuses that can implement the communication methods provided in embodiments of this application. The following briefly describes only the communication apparatuses. For details about solution implementation, refer to the descriptions in the foregoing method embodiments. Details are not described below again.

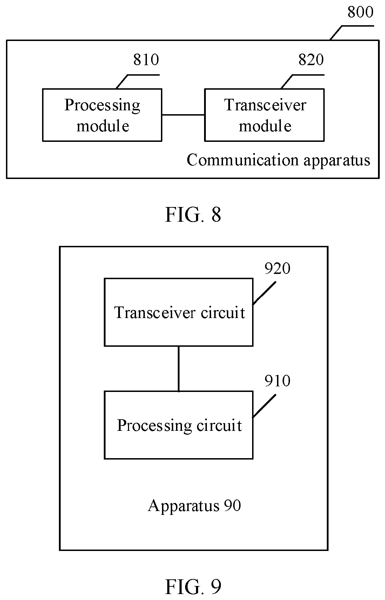

FIG. 8 is a diagram of a structure of a communication apparatus 800 according to an embodiment of this application. The communication apparatus 800 may correspondingly implement functions or steps implemented by the terminal device in the foregoing method embodiments, or may correspondingly implement functions or steps implemented by the application function controller network element in the foregoing method embodiments, or may correspondingly implement functions or steps implemented by the session management function in the foregoing method embodiments, or may correspondingly implement functions or steps implemented by the first network element in the foregoing method embodiments. The communication apparatus may include a processing module 810 and a transceiver module 820. In a possible implementation, the apparatus may further include a storage unit. The storage unit may be configured to store instructions (code or a program) and/or data. The processing module 810 and the transceiver module 820 may be coupled to the storage unit. For example, the processing module 810 may read the instructions (the code or the program) and/or the data in the storage unit, to implement a corresponding method. The foregoing units may be independently disposed, or may be partially or completely integrated. For example, the transceiver module 820 may include a sending module and a receiving module. The sending module may be a transmitter, and the receiving module may be a receiver. An entity corresponding to the transceiver module 820 may be a transceiver circuit, for example, a transceiver or a communication interface.

In some possible implementations, the communication apparatus 800 can correspondingly implement the behavior and functions of the terminal device in the foregoing method embodiments. For example, the communication apparatus 800 may be the terminal device, or may be a component (for example, a chip or a circuit) used in the terminal device. The transceiver module 820 may be, for example, configured to perform all receiving or sending operations performed by the terminal device in the embodiments in FIG. 2 to FIG. 7. The processing module 810 may be, for example, configured to perform all operations performed by the terminal device in the embodiments in FIG. 2 to FIG. 7 other than the receiving and sending operations.

In some possible implementations, the communication apparatus 800 can correspondingly implement the behavior and functions of the application function controller network element in the foregoing method embodiments. For example, the communication apparatus 800 may be an application function controller network element, or may be a component (for example, a chip or a circuit) in an entity used in the application function controller network element. The transceiver module 820 may be, for example, configured to perform all receiving or sending operations performed by the application function controller network element in the embodiments in FIG. 2 to FIG. 7. The processing module 810 may be, for example, configured to perform all operations performed by the application function controller network element in the embodiments in FIG. 2 to FIG. 7 other than the receiving and sending operations.

In some possible implementations, the communication apparatus 800 can correspondingly implement the behavior and functions of the session management function in the foregoing method embodiments. For example, the communication apparatus 800 may be a session management function, or may be a component (for example, a chip or a circuit) in an entity used in the session management function. The transceiver module 820 may be, for example, configured to perform all receiving or sending operations performed by the session management function in the embodiments in FIG. 2 to FIG. 7. The processing module 810 may be, for example, configured to perform all operations performed by the session management function in the embodiments in FIG. 2 to FIG. 7 other than the receiving and sending operations.

In some possible implementations, the communication apparatus 800 can correspondingly implement the behavior and functions of the first network element in the foregoing method embodiments. For example, the communication apparatus 800 may be a first network element, or may be a component (for example, a chip or a circuit) in an entity used in the first network element. The transceiver module 820 may be, for example, configured to perform all receiving or sending operations performed by the first network element in the embodiments in FIG. 2 to FIG. 7. The processing module 810 may be, for example, configured to perform all operations performed by the first network element in the embodiments in FIG. 2 to FIG. 7 other than the receiving and sending operations.

FIG. 9 is a diagram of a structure of another apparatus 90 according to an embodiment of this application. The apparatus in FIG. 9 may be the terminal device or a chip used in the terminal device, or may be the application function controller network element or a chip in an entity used in the application function controller network element, or may be the session management function or a chip in an entity used in the session management function, or may be the first network element or a chip in an entity used in the first network element. As shown in FIG. 9, the apparatus 90 includes a processing circuit 910 and a transceiver circuit 920.

In some embodiments of this application, the processing circuit 910 and the transceiver circuit 920 may be configured to perform functions, operations, or the like performed by a terminal device. The transceiver circuit 920 is, for example, configured to perform all receiving or sending operations performed by the terminal device in the embodiments in FIG. 2 to FIG. 7. The processing circuit 910 is, for example, configured to perform all operations performed by the terminal device in the embodiments in FIG. 2 to FIG. 7 other than the receiving and sending operations.

In some embodiments of this application, the processing circuit 910 and the transceiver circuit 920 may be configured to perform functions, operations, or the like performed by an application function controller network element. The transceiver circuit 920 is, for example, configured to perform all receiving or sending operations performed by the application function controller network element in the embodiments in FIG. 2 to FIG. 7. The processing circuit 910 is, for example, configured to perform all operations performed by the application function controller network element in the embodiments in FIG. 2 to FIG. 7 other than the receiving and sending operations.

In some embodiments of this application, the processing circuit 910 and the transceiver circuit 920 may be configured to perform functions, operations, or the like performed by a session management function. The transceiver circuit 920 is, for example, configured to perform all receiving or sending operations performed by the session management function in the embodiments in FIG. 2 to FIG. 7. The processing circuit 910 is, for example, configured to perform all operations performed by the session management function in the embodiments in FIG. 2 to FIG. 7 other than the receiving and sending operations.

In some embodiments of this application, the processing circuit 910 and the transceiver circuit 920 may be configured to perform functions, operations, or the like performed by a first network element. The transceiver circuit 920 is, for example, configured to perform all receiving or sending operations performed by the first network element in the embodiments in FIG. 2 to FIG. 7. The processing circuit 910 is, for example, configured to perform all operations performed by the first network element in the embodiments in FIG. 2 to FIG. 7 other than the receiving and sending operations.

In a possible implementation, the transceiver circuit 920 includes at least one transceiver, and the processing circuit 910 includes at least one processor, or a circuit that is in the at least one processor and that is used for processing or control.

The transceiver is configured to communicate with another device/apparatus through a transmission medium. The processor sends and receives data and/or signaling through the transceiver, and is configured to implement the methods in the foregoing method embodiments. The processor may implement a function of the processing module 810, and the transceiver may implement a function of the transceiver module 820. Optionally, the transceiver may include a radio frequency circuit and an antenna. The radio frequency circuit is mainly configured to: perform conversion between a baseband signal and a radio frequency signal, and process the radio frequency signal. The antenna is mainly configured to receive and send a radio frequency signal in a form of an electromagnetic wave. An input/output apparatus, such as a touchscreen, a display, or a keyboard, is mainly configured to: receive data input by a user and output data to the user.

Optionally, the apparatus 90 may further include at least one memory, configured to store program instructions and/or data. The memory is coupled to the processor. The coupling in embodiments of this application may be an indirect coupling or a communication connection between apparatuses, units, or modules in an electrical form, a mechanical form, or another form, and is used for information exchange between the apparatuses, the units, or the modules. The processor may perform an operation in collaboration with the memory. The processor may execute the program instructions stored in the memory. At least one of the at least one memory may be included in the processor.

The processor may read a software program in the memory, interpret and execute instructions of the software program, and process data of the software program. When data needs to be sent wirelessly, the processor performs baseband processing on the to-be-sent data, and then outputs a baseband signal to a radio frequency circuit. The radio frequency circuit performs radio frequency processing on the baseband signal, and then sends, through the antenna, a radio frequency signal in an electromagnetic wave form. When data is sent to the apparatus 90, the radio frequency circuit receives a radio frequency signal through the antenna, converts the radio frequency signal into a baseband signal, and outputs the baseband signal to the processor; and the processor converts the baseband signal into data and processes the data.

In another implementation, the radio frequency circuit and the antenna may be disposed independent of the processor that performs baseband processing. For example, in a distributed scenario, the radio frequency circuit and the antenna may be remotely disposed independent of the apparatus 90.

A specific connection medium between the transceiver, the processor, and the memory is not limited in embodiments of this application.

In embodiments of this application, the processor may be one of the following components: a general-purpose processor, a digital signal processor, an application-specific integrated circuit, a field-programmable gate array or another programmable logic device, a discrete gate or a transistor logic device, a discrete hardware component, or all or some circuits used for processing functions in the foregoing components. The processor may implement or perform the methods, the steps, and the logic block diagrams disclosed in embodiments of this application. The general-purpose processor may be a microprocessor or any conventional processor or the like. The steps of the method disclosed with reference to embodiments of this application may be directly performed by a hardware processor, or may be performed by using a combination of hardware in the processor and a software module.

In a possible implementation, the processing circuit 910 includes at least one logic circuit, and the transceiver circuit 920 includes at least one interface. The processing module 810 in FIG. 8 may be implemented using the logic circuit, and the transceiver module 820 in FIG. 8 may be implemented using the interface. The logic circuit may be a chip, a processing circuit, an integrated circuit, a system-on-chip (system-on-chip, SoC), or the like, and the interface may be a communication interface, an input/output interface, or the like. In embodiments of this application, the logic circuit and the interface may be coupled to each other. A specific manner of connection between the logic circuit and the interface is not limited in embodiments of this application.

This application further provides a computer-readable storage medium. The computer-readable storage medium stores a computer program or instructions. When the computer program or the instructions are run on a computer, the computer is caused to perform the methods in the foregoing embodiments.

This application further provides a computer program product. The computer program product includes instructions or a computer program. When the instructions or the computer program is run on a computer, the methods in the foregoing embodiments are performed.

This application further provides a communication system, including the foregoing application function controller network element and the foregoing session management function. Optionally, the communication system further includes the terminal device.

This application further provides a chip. The chip includes a communication interface and a processor. The communication interface is configured to receive/send a signal of the chip, and the processor is configured to execute computer program instructions, so that a communication apparatus including the chip performs the method in the foregoing embodiments.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or instructions are loaded and executed on a computer, all or some of procedures or functions described in embodiments of this application are performed. The computer may be a general-purpose computer, a dedicated computer, a computer network, a network device, a user equipment, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium that can be accessed by a computer, or a data storage device, for example, a server or a data center, integrating one or more usable media. The usable medium may be a magnetic medium, for example, a floppy disk, a hard disk, or a magnetic tape, may be an optical medium, for example, a digital video disc, or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

## Claims

1. A communication method, comprising:
receiving a first message, wherein the first message comprises identification information of a first application, and the first application is an application to be accessed by a terminal device; and
establishing a forwarding tunnel between a first user plane function and a second user plane function, wherein the first user plane function is a user plane function that provides a service to the terminal device, and the second user plane function is associated with a first data network DN in which the first application is deployed.

2. The method according to claim 1, wherein the method further comprises:
receiving a second message, wherein the second message comprises information about an application deployed in the first DN.

3. The method according to claim 2, wherein the method further comprises:
obtaining an association relationship between the first DN and the second user plane function.

4. The method according to claim 2 or 3, wherein the method is applied to a session management function; and before receiving the second message, the method further comprises:
sending a third message to an application function controller network element, wherein the third message is used to obtain information about an application deployed in a DN managed by the application function controller network element, or the third message indicates the application function controller network element to send a notification to the session management function when the information about the application deployed in the DN managed by the application function controller network element changes.

5. The method according to any one of claims 1 to 4, wherein the first message is a session establishment request message from the terminal device, or the first message is a session establishment request message that is from the terminal device and that is forwarded by a core network element.

6. The method according to any one of claims 1 to 4, wherein the first message is from the first user plane function, and the first message indicates that the first user plane function has received data of the first application.

7. The method according to claim 6, wherein the method is applied to a session management function; and before receiving the first message, the method further comprises:
sending a fourth message, wherein the fourth message indicates the first user plane function to notify the session management function after the data of the first application is detected.

8. The method according to any one of claims 1 to 7, wherein after receiving the first message, and before establishing the forwarding tunnel between the first user plane function and the second user plane function, the method further comprises:
determining the first DN in which the first application is deployed; and
determining the second user plane function associated with the first DN.

9. The method according to claim 8, wherein determining the second user plane function associated with the first DN comprises:
determining, based on transmission performance between the first user plane function and a plurality of user plane functions associated with the first DN, the second user plane function associated with the first DN.

10. The method according to any one of claims 1 to 9, wherein establishing the forwarding tunnel between the first user plane function and the second user plane function comprises:
sending a first request message to the first user plane function, wherein the first request message is used by the first user plane function to allocate tunnel information;
receiving a first response message, wherein the first response message carries first tunnel information allocated by the first user plane function;
sending a second request message to the second user plane function, wherein the second request message is used to request the second user plane function to allocate tunnel information, and the second request message carries the first tunnel information;
receiving a second response message, wherein the second response message carries second tunnel information allocated by the second user plane function; and
sending a message carrying the second tunnel information to the first user plane function.

11. A communication method, comprising:
receiving, by a first user plane function, data of a first application;
establishing, by the first user plane function, a forwarding tunnel between the first user plane function and a second user plane function, wherein the second user plane function is associated with a data network DN in which the first application is deployed; and
transmitting, by the first user plane function, the data of the first application through the forwarding tunnel.

12. The method according to claim 11, wherein the method further comprises:
receiving, by the first user plane function, a fourth message, wherein the fourth message indicates the first user plane function to notify a session management function after the data of the first application is detected; and
sending, by the first user plane function, a first message to the session management function, wherein the first message indicates that the first user plane function has received the data of the first application.

13. A communication method, comprising:
generating a second message, wherein the second message comprises information about an application deployed in a first data network DN, and a first application is deployed in the first DN; and
sending the second message to a session management function network element, wherein the second message is used to determine a path through which a terminal device accesses the first application.

14. The method according to claim 13, wherein the second message is used to determine a user plane function through which the terminal device accesses the first application, and the user plane function is associated with the first DN.

15. A communication method, comprising:
sending a session establishment request message, wherein the session establishment request message comprises identification information of a first application; and
transmitting data of the first application through a first session connection, wherein the first session connection comprises a connection between a terminal device and a radio access network, a forwarding tunnel between the radio access network and a first user plane function, and a forwarding tunnel between the first user plane function and a second user plane function, the first user plane function serves the terminal device, and the second user plane function is associated with a data network DN in which the first application is deployed.

16. A communication apparatus, comprising a transceiver module and a processing module, wherein
the transceiver module is configured to receive a first message, wherein the first message comprises identification information of a first application, and the first application is an application to be accessed by a terminal device; and
the processing module is configured to establish a forwarding tunnel between a first user plane function and a second user plane function, wherein the first user plane function is a user plane function that provides a service to the terminal device, and the second user plane function is associated with a first DN in which the first application is deployed.

17. The communication apparatus according to claim 16, wherein
the transceiver module is further configured to receive a second message, wherein the second message comprises information about an application deployed in the first DN.

18. The communication apparatus according to claim 17, wherein
the processing module is further configured to obtain an association relationship between the first DN and the second user plane function.

19. The communication apparatus according to claim 17 or 18, wherein the communication apparatus is a session management function; and
the transceiver module is further configured to send a third message to an application function controller network element, wherein the third message is used to obtain information about an application deployed in a DN managed by the application function controller network element, or the third message indicates the application function controller network element to send a notification to the session management function when the information about the application deployed in the DN managed by the application function controller network element changes.

20. The communication apparatus according to any one of claims 16 to 19, wherein the first message is a session establishment request message from the terminal device, or the first message is a session establishment request message that is from the terminal device and that is forwarded by a core network element.

21. The communication apparatus according to any one of claims 16 to 19, wherein the first message is from the first user plane function, and the first message indicates that the first user plane function has received data of the first application.

22. The communication apparatus according to claim 21, wherein the communication apparatus is a session management function; and
the transceiver module is further configured to send a fourth message, wherein the fourth message indicates the first user plane function to notify the session management function after the data of the first application is detected.

23. The communication apparatus according to any one of claims 16 to 22, wherein
the processing module is further configured to: determine the first DN in which the first application is deployed; and determine the second user plane function associated with the first DN.

24. The communication apparatus according to claim 23, wherein the processing module is further configured to determine, based on transmission performance between the first user plane function and a plurality of user plane functions associated with the first DN, the second user plane function associated with the first DN.

25. The communication apparatus according to any one of claims 16 to 24, wherein
the processing module is further configured to send a first request message to the first user plane function using the transceiver module, wherein the first request message is used by the first user plane function to allocate tunnel information; the transceiver module is configured to receive a first response message, wherein the first response message carries first tunnel information allocated by the first user plane function; the processing module is further configured to send a second request message to the second user plane function using the transceiver module, wherein the second request message is used to request the second user plane function to allocate tunnel information, and the second request message carries the first tunnel information; the transceiver module is configured to receive a second response message, wherein the second response message carries second tunnel information allocated by the second user plane function; and the processing module is further configured to send a message carrying the second tunnel information to the first user plane function using the transceiver module.

26. A communication apparatus, comprising a transceiver module and a processing module, wherein
the transceiver module is configured to receive data of a first application;
the processing module is configured to establish a forwarding tunnel between a first user plane function and a second user plane function, wherein the second user plane function is associated with a data network DN in which the first application is deployed; and the transceiver module is configured to transmit data of the first application through the forwarding tunnel.

27. The communication apparatus according to claim 26, wherein
the transceiver module is further configured to: receive a fourth message, wherein the fourth message indicates the first user plane function to notify a session management function after the data of the first application is detected; and send a first message to the session management function, wherein the first message indicates that the first user plane function has received the data of the first application.

28. A communication apparatus, comprising a transceiver module and a processing module, wherein
the processing module is configured to generate a second message, wherein the second message comprises information about an application deployed in a first DN, and a first application is deployed in the first DN; and
the transceiver module is configured to send the second message to a session management function network element, wherein the second message is used to determine a path through which a terminal device accesses the first application.

29. The communication apparatus according to claim 28, wherein the second message is used to determine a user plane function through which the terminal device accesses the first application, and the user plane function is associated with the first DN.

30. A communication apparatus, comprising a transceiver module and a processing module, wherein
the processing module is configured to generate a session establishment request message; and
the transceiver module is configured to send a session establishment request message, wherein the session establishment request message comprises identification information of a first application; and transmit data of the first application through a first session connection, wherein the first session connection comprises a connection between a terminal device and a radio access network, a forwarding tunnel between the radio access network and a first user plane function, and a forwarding tunnel between the first user plane function and a second user plane function, the first user plane function serves the terminal device, and the second user plane function is associated with a DN in which the first application is deployed, or the first session connection comprises the connection between the terminal device and the radio access network and a forwarding tunnel between the radio access network and the second user plane function, and the second user plane function is associated with the DN in which the first application is deployed.

31. A computer-readable storage medium, wherein the computer-readable storage medium stores a computer program, the computer program comprises program instructions, and when the program instructions are executed by a processor, the method according to any one of claims 1 to 15 is performed.

32. A communication apparatus, comprising a processor, wherein when the processor is configured to execute instructions, the communication apparatus is enabled to perform the method according to any one of claims 1 to 15.

33. A computer program product, wherein the computer program product comprises a computer program, the computer program comprises program instructions, and when the program instructions are executed, a computer is enabled to perform the method according to any one of claims 1 to 15.

34. A chip, comprising:
a communication interface, configured to receive and send signals of the chip; and
a processor, configured to execute computer program instructions, to enable a communication apparatus comprising the chip to perform the method according to any one of claims 1 to 15.

35. A communication system, comprising the communication apparatus according to any one of claims 16 to 25, the communication apparatus according to claim 26 or 27, and the communication apparatus according to claim 28 or 29.

36. The communication system according to claim 35, wherein the communication system further comprises the communication apparatus according to claim 30.

37. A computer program product, wherein when the computer program product is run on a computer, the computer is enabled to perform the method according to any one of claims 1 to 15.
